# EUROPEAN PATENT APPLICATION

(11) **EP 1 645 997 A2**
(43) Date of publication of application: **12.04.2006**
(21) Application number: 05019156.8
(22) Date of filing: 02.09.2005
(51) Int. Cl.: G06Q 10/00

(54) **Method and system for uniquely labelling products**

(30) Priority: 03.09.2004 US 933358
(71) Applicant: SIEMENS AKTIENGESELLSCHAFT, 80333 München (DE)
(72) Inventor: Becker, Peter, 76571 Gaggenau (DE); Dabrowski, Ivo, 76316 Malsch-Völkersbach (DE)

(57) **Abstract**

An electronic labeling system and method for uniquely identifying and labeling products. A dedicated memory device and an associated display device are attached to and associated with one or more of a group of products. Customer-specific data is downloaded to the memory device using a non-contact data transmission link and stored in the memory device. The stored data is then transmitted to the display device, which is, e.g., a highly flexible, thin device, such as e-paper, where the customer-specific data, such as customer name and address, assembly instructions related to the product, operating instructions related to the product, and/or any other data deemed useful with respect to the product, is displayed. The data displayed on the label/display can be updated as often as desired to ensure up-to-date information is being provided.

## Description

### BACKGROUND OF THE INVENTION

### Field of the Invention

The present invention relates to the field of automation technology and inventory control for mass-produced components. More particularly, the invention relates to a system and a related method for providing selected ones of a group of mass-produced components with unique identifying data, such as component-specific data, by transmitting the data to a memory device attached to the component and displaying the information on an integrated display device.

### Description of the Related Art

Conventionally, various products are mass-produced in a factory or plant and each of the similar products is then designated for a specified customer who then resells the product to an end user. For example, a computer manufacturer may mass-produce similar computers for a number of different retail outlets that purchase the computers from the manufacturer and then resell the computers under their own brand name. Typically, since each of the computers that are manufactured at the plant is precisely the same, it is necessary to uniquely identify, or label, each of the products so it can be specifically associated with the various resellers.

One known solution is to provide stick-on labels to the packaging of the product or directly on the product itself. This solution is not ideal, however, because the information provided on the stick-on label cannot be further directly processed electronically, for example, either by the component itself or by third-party devices. Further, the stick-on label is not inseparably connected to the component, so the possibility of misidentifying a particular component cannot be entirely avoided. Moreover, it is impossible to ensure that the information provided on the stick-on label is up-to-date. That is, the information may have been written on the label several months, or even years, prior and may be obsolete. In addition, in an industrial environment where several opportunities exist for exposing the labels to dirt and grime, stick-on labels are susceptible to soiling and/or aging, so that legibility is impaired or the label may fall off the component when the adhesive becomes ineffective due to heat and/or moisture. Accordingly, stick-on labels do not provide an adequate solution to the problem of providing unique customer-specific information to a mass-produced product.

Another solution to the problem of uniquely identifying or labeling mass-produced components is to supply an additional memory device to the component and storing client-specific data on the memory device. For example, a SIM card has been used in the case of a cellular telephone and on vehicle locks with electronic keys. In the case of the vehicle locks, the device is queried by an electronic control device and the control device then allows the vehicle to be started only after correct authentication has been obtained.

The SIM card solution, however, is also not ideal with respect to the instant problem because the information stored on the memory device must be known during the production process of the component in order to store the information in or on the component. For example, it must be known, apriori, which vehicle key fits which vehicle. Otherwise, like the stick-on labels discussed above, the information is separate from the component.

A different solution has been proposed to a somewhat similar problem in PCT Patent Publication WO9962269 ("the '269 reference"), entitled Remote Controlled Electronic Price Tag.

In the `269 patent, in order to provide pricing information that can be modified easily and without the requirement of replacing physical price tags on goods each time the price of the good is to be changed, an electronic price tag is adapted for wireless adjustment. The price tag consists of a display placard mounted to the goods at, for example, the point of manufacture of the goods. A plurality of price display fields are available on the placard and a receiver/decoder device is mounted to the placard for receiving signals from a remote location and decoding the received signals to be inputted to the price display field. The price tag is also provided with a transponder to confirm receipt and acceptance of pricing information generated from the remote location so that inventory control can be conducted at a predetermined time or with respect to any price adjustment to the goods. The price display fields are electronic, such as liquid crystal display (LCDs) or electronic ink.

The electronic price tag disclosed in the '269 patent provides certain advantages over a paper price tag mounted to the goods, e.g., a stick-on label similar to the one described above. However, the '269 patent does not address the issue of how to provide, control and display unique component-specific information on each of a number of mass-produced components, such that each of the components can be easily identified as being associated with a particular retailer or other customer and the information displayed in regard to the components can be easily modified. The `269 patent also does not address the concept of downloading data such as assembly instructions or operations instructions related to the component.

In particular, a system is desired for controlling data displayed on each of a number of mass-produced products. For example, when a manufacturer produces a large number of components and stores them all in a storage facility so orders can be filled quickly when different retailers order similar components for resale, it is desired that each of the mass-produced products can be easily provided with unique displayable data that both identifies the retailer and also provides additional customer and/or component-specific information that is useful to the end-user.

### SUMMARY OF THE INVENTION

In order to address the above and other problems associated with the conventional solutions described above and to provide a method and system in accordance with a desired system as also mentioned above, a method in accordance with one embodiment of the present invention comprises first producing one or more components and providing each of the components with a respective electronic label having an integrally connected memory device and an integrally connected display device. The method further comprises inputting component-specific data to the respective memory device associated with at least one of the components, wherein the data is transferred to the memory device via a wireless data link, and displaying the component-specific data on the display device.

The component-specific data that is ultimately displayed on the display device has unique data associated with the respective component. For example, the data can include, the name of a reseller of the component, assembly instructions related to the component, operating instructions related to the component or any other useful component or customer-specific data. Further, the wireless data link used to originally download the data to the memory device is, for example, in accordance with RFID technology as is well known, and the display device can be e-paper or any other suitable thin, flexible display that can read the data from the memory device.

A system in accordance with the present invention comprises one or more electronic labels, each electronic label being associated with at least one of the components and comprising a respective integrally connected memory device and an integrally connected display device, wherein the display device is operable to download the component-specific data from the memory device and display the data, and a wireless data link operable to input the component-specific data to the respective memory device associated with at least one of the electronic labels.

As discussed above, the component-specific data displayed on the display device comprises unique data associated with the respective component, such as, the name of a reseller of the component, assembly instructions related to the component, operating instructions related to the component or any other useful component or customer-specific data.

These and many other objects and advantages of the present invention will be readily apparent to one skilled in the art to which the invention pertains from a perusal of the claims, the appended drawings, and the following detailed description of various exemplary embodiments.

### BRIEF DESCRIPTION OF THE DRAWINGS

For a better understanding of the invention and to show how the same may be carried into effect, reference will now be made, by way of example, to the accompanying drawings, in which:
FIG. 1 is a diagram illustrating a basic conception of the present invention.
FIG. 2 is a diagram illustrating an exemplary embodiment of the present invention where the memory device and the display device are connected directly.
FIG. 3 is a diagram illustrating a further embodiment of the present invention where a processing unit is provided between the memory device and the display device.
FIG. 4 is a diagram illustrating a further embodiment of the present invention where an image scanning device is included for scanning and capturing the pixel data on the displayed image.
FIG. 5 is a diagram illustrating a further embodiment of the present invention where an interface processing unit is provided to read and write data from/to the labeling device and send the data over a bus to a third party device.
FIG. 6 is a diagram illustrating an exemplary use for an electronic labeling system in accordance with the present invention.
FIG. 7 is a diagram illustrating a further embodiment of the present invention where an augmented reality device is included for reading and displaying data from the electronic labeling device in an alternate fashion as that of FIGS. 1-6.

### DETAILED DESCRIPTION OF AN EXEMPLARY EMBODIMENT

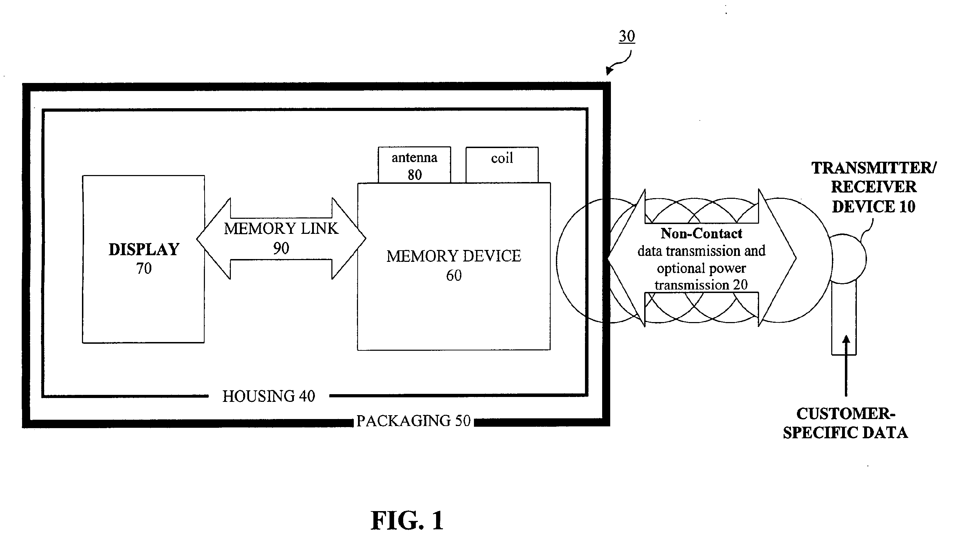

With reference to FIG. 1, the basic concept of the present invention will now be described. As shown in FIG. 1, a transmit/receive device 10 is provided which is operable to send and receive data via a wireless, non-contact, data link 20 to a component 30. The data link is not limited to a wireless link and could, if desired also be implemented in a direct wireline connection via a cable. In accordance with the present non-limiting embodiment, the component 30 is one of a number of mass-produced products, all of which are produced in similar fashion. Further, component 30 is to be stored along with other similar components until such time when the component is to be delivered to a another party, such as a reseller of the components.

In accordance with the present exemplary embodiment, the component 30 includes a housing 40 and is enclosed within a packaging material 50. Transmit/receive device 10 is operable to store and transmit programmable customer-specific data into an onboard memory device 60 located on the component 30. For example, transmit/receive device 10 is first loaded with customer-specific data. Various methods can be used to load the transmit/receive device 10 with data.

For example, data can be loaded directly by a user via a keypad or it can be loaded via a cable from another device or stored on an electronic storage device and inserted onto the transmit/receive device 10. Transmit/receive device 10 then uses a wireless link, such as the RFID technology described, for example, in U.S. Patent No. 5,621,199, the contents of which are incorporated herein in their entirety by reference, to transmit data through the packaging 50 and/or housing 40. The wirelessly transmitted data is then received by an antenna 80 and stored within memory device 60.

Once the data is transmitted from transmit/receive device 10 to the memory device 60 associated with the component 30, a display device 70 is operated to display information derived from the data. For example, the information displayed on the display device 70 is obtained directly from the memory device 60 via memory link 90. In accordance with one embodiment, display device 60 is a highly-flexible device that is easily attached to various products and/or components. The highly-flexible display can, preferably, be manufactured easily and consumes little or no power, and can, therefore, be manufactured inexpensively and can be incorporated into a variety of applications. Preferably, the display includes a printable display and can be constructed so that the optical state of the display is stable for an extended period of time.

For example, display device 70 can be a device such as the device described in U.S. Patent Number 6,664,944, the contents of which are incorporated herein in their entirety by reference. The display device in accordance with the present invention preferably consumes very little electric current and/or does not need a permanent power supply. Further, the display device is a portable medium which can be rewritten repeatedly by electronic means.

According to further embodiments, described in more detail below, memory link 90 can be either a wireline or a wireless connection between display device 70 and memory device 60.

In accordance with the present invention, the information displayed on display device 70 is client-specific information, such as a company name, a company logo, address or other contact information, the date of manufacture relative to the component, assembly instructions, including figures, illustrating how to assemble or hook-up the component, or any other customer-specific or component-specific information.

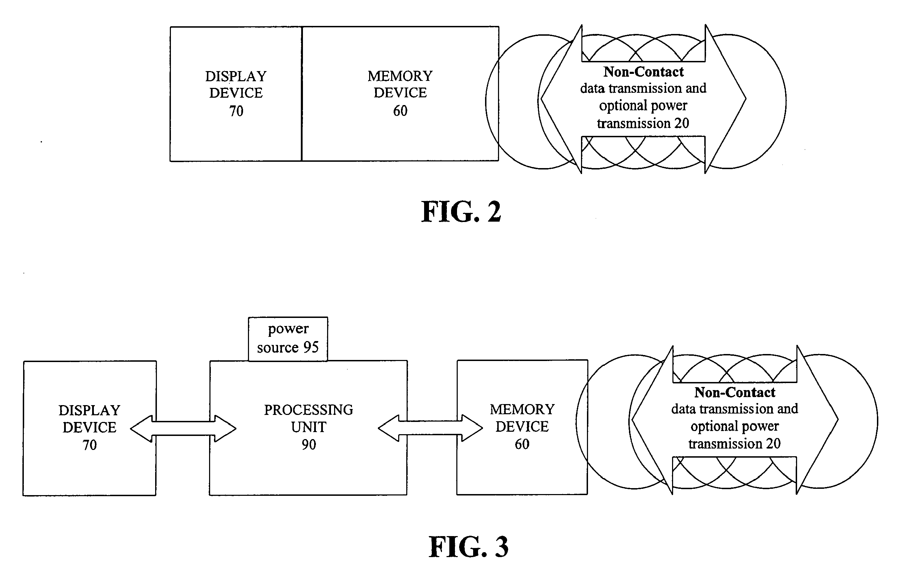

More specific exemplary embodiments of the present invention will now be described in reference to FIGS. 2-5. In FIGS. 2-5, parts that are similar to those illustrated and described with reference to FIG. 1 are designated with similar reference numerals.

FIG. 2 illustrates an exemplary embodiment of the present invention in which the memory device 60 is linked directly to the display device 70 as the output element. That is, the contents of the memory device 60, for example, text, etc., are output directly to the display. For example, the display device could be an electronic paper device (e-paper) such as eInk, Smart Paper™ by Gyricon Media, APD™ by Citala, etc., and the like, and the e-paper is applied to either the exterior of the packaging of the component or to the housing of the component directly. Further, the memory device is integrated as part of the e-paper. Data is downloaded via the non-contact data link 20 into the integrated memory device and displayed on the e-paper. Again, the data displayed on the e-paper is customer-specific data such as a reseller's name and address, etc, and/or any other information related to the component that is desired to be displayed on the e-paper.

FIG. 3 illustrates a further exemplary embodiment of the present invention in which a processing unit 90 is provided between the memory device 60 and the display 70 (e.g., e-paper). The processing unit 90 is connected to both the display device and the memory device and is used to interpret the contents of the memory device and provide processed data to the display. By manipulating, or processing, the contents of the memory device 60, the display on, for example, the e-paper, can be controlled. By providing processing unit 90, it is, for example, possible to display graphics on the display. For example, a customer-specific logo or other graphic design can be processed and displayed. Additionally, in accordance with this embodiment, it is possible to provide effects such as color changes for the text or graphics and provide animations as well.

Furthermore, in accordance with this and other embodiments, to prevent certain errors or unauthorized manipulation of the data stored on the memory device 60 and/ or displayed on the display device 70, an additional authentication mechanism (not shown) could be implemented to ensure that the data is revised by only the manufacturer or another authorized person or party. For example, processing unit 90 could be programmed to modify the display contents only when a proper identification code is first input via the non-contact data link 20. Additional authentication techniques are readily known and are not discussed further here.

In accordance with the present embodiment, when, for example, a processing unit 90 is provided for reading and writing data, a power source is required from which the processing unit can derive power. For this purpose, different power sources are possible including, for example, a battery that can be attached directly with the processing unit 90. The processing unit 90 can then be started and stopped by, for example, a non-contact switch (not shown).

Another option in regard to providing power to the processing unit 90 is to provide a coil or other capacitive device so that electric voltage can be generated in the component by a non-contact method, e.g., according to the transformer principle.

It should be noted, however, that the present invention is not limited to the above-described power sources, and various effective power sources will be contemplated by those of ordinary skill in the art.

In accordance with a further aspect of the present embodiment, the data downloaded via the non-contact data link 20 is a software program (not shown) that is stored in memory device 60 and can be either run by processing unit 90 or further downloaded into an additional memory device or processing unit within the component.

One specific example of a system in accordance with the present embodiment is an industrial automation system which is outfitted with the necessary software program for describing how to operate certain machines depending on information retrieved from sensors connected to the industrial automation system. This would be the software program directly executed by the processing unit 90. The same industrial automation system could also be connected to additional decentralized automation devices which themselves have the ability to process software programs. These software programs could also be downloaded indirectly through the first industrial automation system.

Both of the above-mentioned methods allow the complete automation system to run with little or no extra programming directly "out-of-the-box". Today, there are already simulators for automation systems and also for their respective input/output signals (going from and to actuators and sensors) so that software programming of automation systems can already be prepared without any hardware available except for a PC which runs the simulation software.

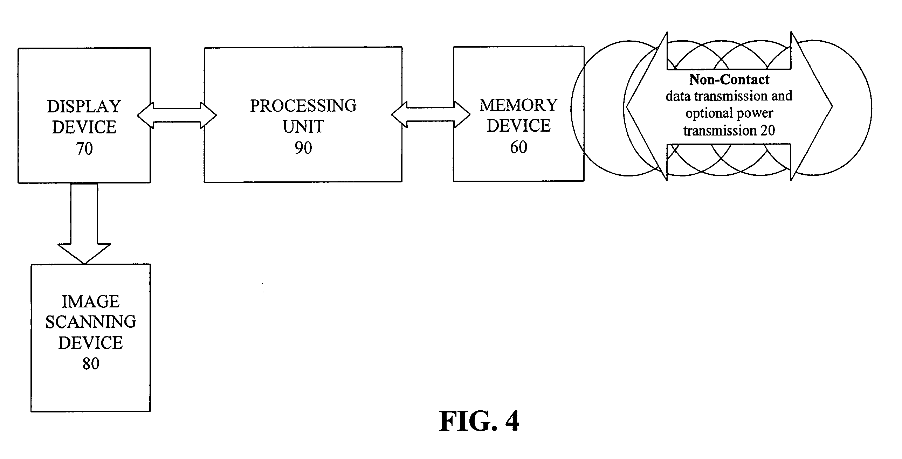

FIG. 4 illustrates a further exemplary embodiment of the present invention in which the information stored in memory device 60 can be displayed as a pixel matrix on the display device 70. The displayed information can then be directly processed further by scanning, e.g., photographing, the pixel information and processing it electronically. For example, a graphics scanning device, such as a digital camera integrated into certain cellular telephones or PDAs, or with a mobile computer or scanner, can scan and capture the graphics image displayed on the display device 70. The captured image can then be analyzed or processed in order to determine certain information related to the component to which the display device is attached. The concept of this particular aspect of the embodiment is similar to a barcode scanner, which is well known in the art, with one difference being that, based on the number of image pixels provided, the information density provided in an image display in accordance with the present embodiment is much greater than the information density provided with a barcode. Accordingly, the transmittable volume of information increases with the resolution of the display device (e.g., e-paper) and the resolution of the camera or scanner.

Similar to the embodiment described above, the present embodiment also offers the possibility of having only authorized persons read out the information. According to the embodiment depicted in FIG. 4, the pixel matrix of the displayed image represents encoded information which is then converted back into readable information only with the aid of a proper analysis and/or decryption program.

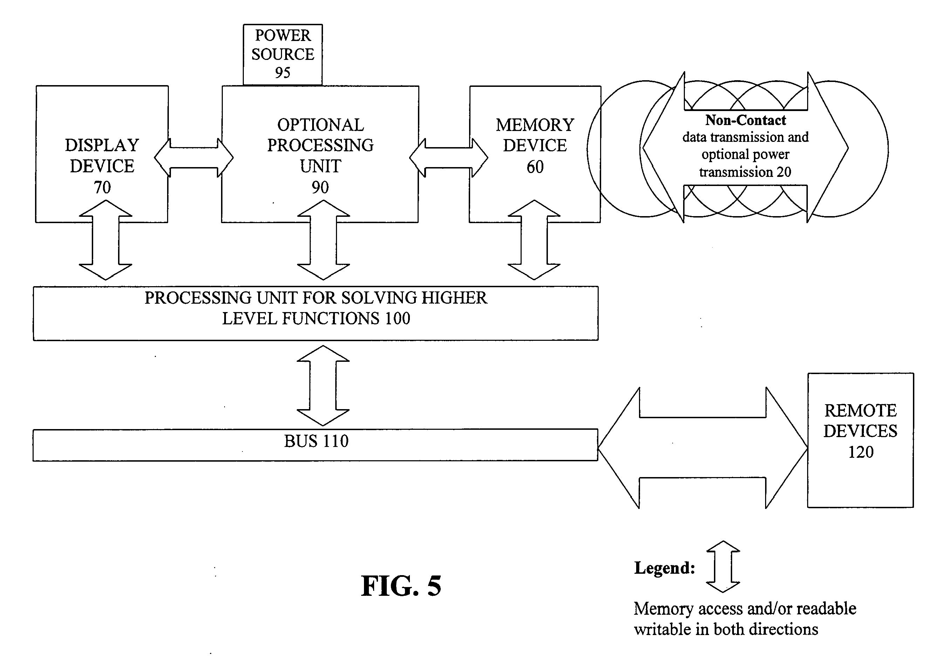

A further embodiment of the present invention is depicted in FIG. 5. As shown in FIG. 5, an additional processing unit 100 is provided which connects to the display device 70, the optional processing unit 90 discussed above in regard to the embodiment of FIG. 3, and the memory device 60. The additional processing unit 100 will hereinafter be referred to as an interface processing unit 100 for reasons discussed below.

A primary function of the interface processing unit 100 is different than the function described above for the optional processing unit 90. That is, the function of processing unit 100 is not for providing processed data for display to the connected display device but instead processing unit 100 controls an interface process and has access to the display device 70 and/or the memory device 60. In accordance with the present embodiment, information or data can be written to and/or read from the display device 70, the memory device 60 and the optional processing unit 90, in an ongoing manner. For example, interface processing unit 100 can read or write data to/from the display device 70, the memory device 60 or the processing unit 90, during the same time the memory device 60 is downloading data to either the display device 70 or the processing unit 90. The data read by or written by the interface processing unit 100 can be, for example, input or output information from or to the processing unit 90. Additionally, the data can also be read out from and/or written to remote devices 120 via a bus 110 connected to the interface processing unit 100. In this manner, for example, data can be read from the memory device 60 and sent to another location via bus 110 where data from various components can be accumulated and processed.

This allows the system to, for example, display status information of an industrial automation system even after the system has run into a defect and, thus, can not communicate the status information over a bus system to other devices. The display device 70 can still display such information regarding, for example, reasons for the defect even after shutdown or power-off.

Another advantageous aspect of the present embodiment is that the most recent status of the device, or any information displayed on the display device, is inherently saved and/or displayed after the device itself is powered-off, allowing diagnosis of the situation that caused the failure or power-off.

As described above in regard to other embodiments, a power source 95 is provided in connection with processing unit 90. The power source can be either a coil, a battery or any other suitable source of power.

In accordance with a further embodiment, instead of labeling the individual component with the electronic labeling device in accordance with the present invention, the labeling device can be provided or attached directly to a pallet, crate or other such structure that holds a number of different components. For example, a pallet may contain several individual components. Instead of attaching a labeling device to each of these components, a labeling device in accordance with the present invention can be attached to the pallet itself where data with respect to all or a portion of the components contained thereon can be downloaded and displayed. In this manner it is easy to modify and display data regarding pallet contents, shipment information, etc., for the components on the pallet.

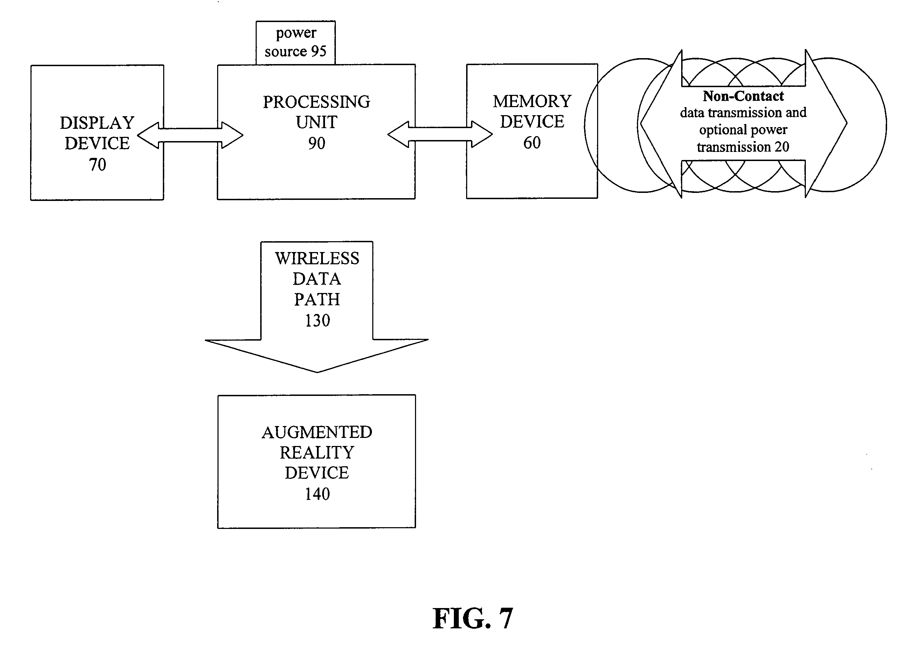

In accordance with another embodiment, for example, as shown in FIG. 7, an additional data readout and display device is provided whereby data is read out wirelessly 130 from processing unit 90 and/or the memory device 60 and displayed on the additional device 140. The additional device can be used, for example, when the information stored in the labeling device cannot be easily displayed on the display device 70 due to the complexity and/or amount of the data. Read-out and display of the data under these conditions can be accomplished, for example, with augmented reality mechanisms 140 such as glasses or goggles, head-mounted displays or heads-up displays, or by way of a cell phone, pocket PC or other special analyzer device. An example of an augmented reality device that can be used in accordance with the present embodiment is disclosed, for example, in commonly owned U.S. Application No. 10/463,695, the contents of which are incorporated herein in their entirety by reference.

In accordance with the present invention, several advantages are gained over conventional devices. For example, display of assembly, start-up and/or connection instructions can be easily provided directly on a display which is attached to the packaging or housing of the component. Information regarding how to assemble the components correctly or perform the wiring can be provided even prior to installation and connection of the components. In this way, on-board electronic information can be made available without the component necessarily having to be online or in operation.

Additionally, implicitly up-to-date information is displayed and provided to the user of the component or any other purveyor of the information. This is because the information can be easily provided to the memory device in an ongoing manner and immediately displayed on the display device.

Additionally, in a startup mode of the device, it is possible to discover defects as a result of the direct graphic display. For example, a discontinuity of a "bar arrow" might indicate the direction to a component which has been connected at the wrong location or may point to a bus error. Finding a bus error could be realized, for example, by using the results of a diagnosis program run on a processing unit which is able to locate the failing module within a number of different modules connected to the main module (e.g., automation system) via a bus system. This result can, for example, be used to display a continuous arrow on the still functioning modules with the last functioning module displaying the end of the arrow. Thus, the operator can easily identify the failing module visually and replace it.

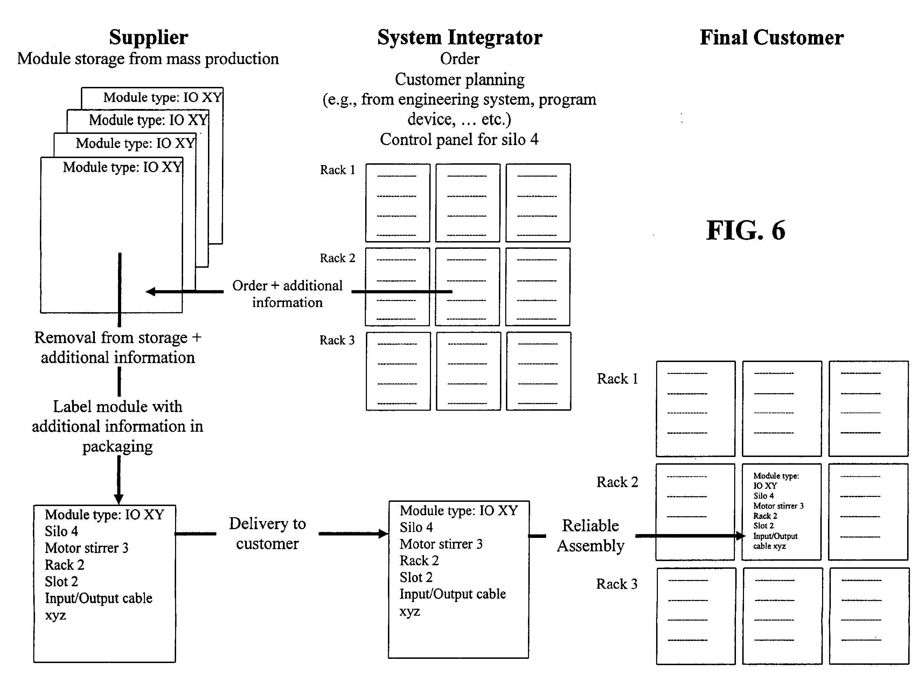

A non-limiting example illustrating a typical use of the present invention will now be described in reference to FIG. 6. In a system according to FIG. 6, the system integrator would plan the modules needed for the ordered part of the customer plant and possibly partly or in full realize the software components needed for the operation of the respective part of the plant at the customer's site. Consequently, the system integrator would transfer the order for the necessary parts to the supplier including data to be included with the individual components such as customer-specific data to be displayed on the display devices of the modules, and/or including also software components already realized by the system integrator, and/or including information about the location of the respective module within the control cabinet.

Correct placement within the control cabinet at the customer's site may be critical, e.g., due to the combination of different bus systems within a system or other requirements such as addressing modes, which means that certain modules are addressed by addresses derived from the insertion place of the module detected at startup.

An easy way to display the sequence in which the modules have to be arranged within a control cabinet and, additionally, to provide a numbering system displaying information about the destination location, would be, for example, a continuous triangle. This means that each module in such a system that is connected to the next module via a bus system would display one part of the triangle to allow for simple combination of the components in the right sequence and also to visually diagnose a module which has been inserted in the wrong spot. To make identification of such an incorrectly inserted module even easier, it is also possible to use a color gradient (or different shades of black if only a black and white display is available) additionally, or instead of, the triangle shape. Using this shading or gradient, one can also see if one module is placed at the right position but in the wrong top hat rail.

This method also allows the customer, for example, to display wiring information on each input/output-module which means that pre-configured cables connecting the modules to machines or sensors can be visually assigned to the module they need to be connected to even before start-up. After each module has been placed correctly within the control cabinet and the pre-configured cables have been connected to the respective modules, the software program which the system integrator uploaded to the supplier with the order, and which the supplier downloaded to the respective main module, allows the customer to start up at least parts of the plant without further programming.

The above description of the preferred embodiments has been given by way of example. From the disclosure given, those skilled in the art will not only understand the present invention and its attendant advantages, but will also find apparent various changes and modifications to the structures and methods disclosed. It is sought, therefore, to cover all such changes and modifications as fall within the spirit and scope of the invention, as defined by the appended claims, and equivalents thereof.

## Claims

1. A method of controlling component-specific data associated with manufactured components, the method comprising:
producing one or more components;
providing each component with a respective electronic label comprising an integrally connected memory device and an integrally connected display device;
inputting component-specific data to the respective memory device associated with at least one of the components, wherein the component-specific data is input to the memory device via a wireless data link; and
displaying the component-specific data on the display device,
wherein the component-specific data comprises data associated specifically with the respective component.

2. A method as claimed in claim 1, wherein the displayed data comprises the name of a reseller of the component.

3. A method as claimed in claim 1, wherein the displayed data comprises assembly instructions related to the component.

4. A method as claimed in claim 1, wherein the displayed data comprises operating instructions related to the component.

5. A method as claimed in claim 1, wherein the wireless data link is an RFID link.

6. A method as claimed in claim 1, wherein the display device is an e-paper device.

7. A method of controlling component-specific data for manufactured components, the method comprising:
producing a plurality of components;
providing each of the components with a respective electronic label comprising an integrally connected memory device, a processing unit and a display device, wherein the processing unit is operably connected to the display device and the memory device;
inputting component-specific data to the respective memory device associated with at least one of the components, wherein the component-specific data is inputted to the memory device via a wireless data link;
processing the data inputted to the memory device with the processing unit; and
displaying the processed component-specific data on the display device,
wherein the component-specific data comprises data associated specifically with the respective component.

8. A method as claimed in claim 7, wherein the displayed data comprises the name of a reseller of the component.

9. A method as claimed in claim 7, wherein the displayed data comprises assembly instructions related to the component.

10. A method as claimed in claim 7, wherein the displayed data comprises operating instructions related to the component.

11. A method as claimed in claim 7, wherein the displayed data comprises at least one graphics image related to the component.

12. A method as claimed in claim 7, wherein the wireless data link is an RFID link.

13. A method as claimed in claim 7, wherein the display device is an e-paper device.

14. A method of controlling component-specific data for manufactured components, the method comprising:
producing one or more components;
providing each of the components with a respective electronic label comprising an integrally connected memory device, a processing unit and a display device, wherein the processing unit is operably connected to the display device and the memory device;
inputting component-specific data to the respective memory device associated with at least one of the components, wherein the data is inputted to the memory device via a wireless data link;
processing the data inputted to the memory device with the processing unit;
displaying the processed component-specific data on the display device;
providing an interface processing unit that is operably connected to at least the integrally connected memory device of the component;
downloading data from at least the integrally connected memory device into the interface processing unit; and
transmitting the data downloaded into the interface processing over a data bus,
wherein the component-specific data comprises data specifically associated with the respective component.

15. A method as claimed in claim 14, wherein the displayed data comprises the name of a reseller of the component.

16. A method as claimed in claim 14, wherein the displayed data comprises assembly instructions related to the component.

17. A method as claimed in claim 14, wherein the displayed data comprises operating instructions related to the component.

18. A method as claimed in claim 14, wherein the displayed data comprises at least one graphics image related to the component.

19. A method as claimed in claim 14, wherein the component-specific data is input to the memory device via an RFID device.

20. A method as claimed in claim 14, wherein the display device is an e-paper device.

21. A method as claimed in claim 14, further comprising:
saving at least one of a last status of the respective component and last information displayed on the display device after a power-off or failure condition has occurred; and
determining the cause of the power-off or failure condition based on the saved last status or last information.

22. An electronic labeling system configured to control component-specific data associated with manufactured components, the system comprising:
one or more electronic labels, each electronic label being associated with at least one of the components and comprising a respective integrally connected memory device and an integrally connected display device, wherein the display device is configured to download the component-specific data from the memory device and display the data; and
a wireless data link operable to input the component-specific data to the respective memory device associated with at least one of the electronic labels,
wherein the component-specific data comprises data specifically associated with the respective component.

23. A system as claimed in claim 22, wherein the component-specific data comprises the name of a reseller of the component.

24. A system as claimed in claim 22, wherein the component-specific data comprises assembly instructions related to the component.

25. A system as claimed in claim 22, wherein the component-specific data comprises operating instructions related to the component.

26. A system as claimed in claim 22, wherein the component-specific data is input to the memory device via an RFID device.

27. An electronic labeling system configured to control component-specific data associated with manufactured components, the system comprising:
one or more electronic label devices, each label being associated with one or more of the manufactured components, each electronic label comprising a respective integrally connected memory device, a processing unit and a display device, wherein the processing unit is operably connected to the display device and the memory device and the display device is configured to display the component-specific data; and
a wireless data link configured to input the component-specific data to the respective memory device connected to the electronic label of at least one of the components,
wherein the component-specific data comprises data specifically associated with the respective component.

28. A system as claimed in claim 27, wherein the component-specific data comprises the name of a reseller of the component.

29. A system as claimed in claim 27, wherein the component-specific data comprises assembly instructions related to the component.

30. A system as claimed in claim 27, wherein the component-specific data comprises operating instructions related to the component.

31. A system as claimed in claim 27, wherein the component-specific data comprises at least one graphics image related to the component.

32. A system as claimed in claim 27, wherein the component-specific data is input to the memory device via an RFID device.

33. A system as claimed in claim 27, further comprising an interface processing unit operably connected to at least the memory device and configured to download data from the memory device, process the data and transmit the processed data to over a data bus.

34. A system as claimed in claim 27, further comprising an augmented reality device configured to read data from the one or more electronic labels over a wireless data transmission path.

35. An electronic labeling system as claimed in claim 34,
wherein the augmented reality device comprises a pair of goggles worn by a user and wherein the user senses the component-specific data of a respective component by directing the goggles in the direction of the electronic label associated with that particular component.

36. A system as claimed in claim 27, further comprising an image scanning device operable to scan and process the displayed image on the display device and determine detailed information related to the associated component.

37. A system as claimed in claim 27, wherein the component comprises a module in an automation device.

38. A method of controlling component-specific data associated with manufactured components, the method comprising:
producing one or more components;
providing each component with a respective electronic label comprising an integrally connected memory device and an integrally connected display device;
inputting product-identifying data and component-specific data to the respective memory device associated with at least one of the components, wherein the component-specific data is input to the memory device via a wireless data link; and
displaying one or more of the product-identifying data and the component-specific data on the display device,
wherein the component-specific data comprises data associated specifically with the respective component.

39. A method as claimed in claim 38, wherein the component-specific data comprises at least one or more of customer-specific data, data related to the operation of the component, and data related to documentation of the lifetime of the component.

40. A method as claimed in claim 38, wherein the one or more of the product-identifying data and the component-specific data displayed on the display device is displayed even when the component is turned off.
